# EUROPÄISCHE PATENTSCHRIFT

(11) **EP 1 616 116 B1**
(45) Veröffentlichungstag und Bekanntmachung des Hinweises auf die Patenterteilung: **02.11.2011**
(21) Anmeldenummer: 04725313.3
(22) Anmeldetag: 02.04.2004
(51) Int. Cl.: F16H 63/20, F16H 3/00

(54) **MEHRSTUFIGES SCHALTGETRIEBE FÜR EINE BRENNKRAFTMASCHINE**
MULTI-STEP MANUAL TRANSMISSION FOR AN INTERNAL COMBUSTION ENGINE
BOITE DE VITESSES MULTI-ETAGEE POUR MOTEUR A COMBUSTION INTERNE

(30) Priorität: 09.04.2003 DE 10316163
(43) Veröffentlichungstag der Anmeldung: 18.01.2006
(73) Patentinhaber: Dr. Ing. h.c. F. Porsche AG, 70435 Stuttgart (DE)
(72) Erfinder: KLUGE, Marc, 74354 Besigheim (DE)
(86) Internationale Anmeldenummer: PCT/EP2004/003499
(87) Internationale Veröffentlichungsnummer: WO 2004/090388

(56) Entgegenhaltungen:
- WO-A-2004/008005
- FR-A- 2 815 103
- US-A- 4 335 623
- US-B1- 6 427 548

## Beschreibung

Die Erfindung geht aus von einem mehrstufigen Schaltgetriebe für eine Brennkraftmaschine gemäß den Merkmalen des Oberbegriffs des Anspruchs 1.

So genannte Doppelkupplungsgetriebe (siehe z.B. DE 100 38 090 A1) sind im Fahrzeugbau seit vielen Jahren bekannt und finden zunehmend auch im Sportwagenbereich Anwendung, um den geringeren Kraftstoffverbrauch und die Sportlichkeit eines Handschaltgetriebes mit dem Komfort eines Automatikgetriebe zu verbinden. Während über den einen Strang angetrieben wird, kann auf dem anderen Strang die nächste Übersetzungsstufe vorgewählt werden. Das vordergründig Attraktive ist die Verwendung bekannter und bewährter Schaltelemente (Synchronisier - Einrichtungen und Kupplungen).

Aus der FR 2 815 103 A ist ein gattungsgemäßes Schaltgetriebe für eine Brennkraftmaschine bekannt, bei dem zur Umsetzung einer H-Schaltung zur Einstellung von geraden und ungeraden Gängen jeweils eine Schaltwelle vorgesehen ist, die über eine gemeinsame Wähl- und Schaltbetätigung bedienbar sind.

Funktionsbedingt ist die Radsatzanordnung für ein Doppelkupplungsgetriebe so gewählt, dass die geraden und die ungeraden Gänge jeweils auf einer eigens dafür vorgesehenen Getriebeeingangswelle angeordnet sind. Um einen derartigen Doppelkupplungsradsatz auch für ein konventionelles Handschaltgetriebe nutzen zu können (Stichwort:
Gleichteileprinzip) wäre beispielsweise eine hydraulische Ansteuerung der den einzelnen Gängen zugeordneten Synchronisiereinrichtungen erforderlich. Mit einer klassischen Innenschaltung wäre das beim Handschaltgetriebe bekannte H - Schaltbild nicht umsetzbar.

Aufgabe der Erfindung ist es daher, eine Schaltbetätigung für die Radsatzanordnung eines Doppelkupplungsgetriebes zu schaffen, mit dem ein konventionelles H - Schaltbild umsetzbar ist.

Die Aufgabe wird durch die im Anspruch 1 angegebenen Merkmale gelöst.

Durch die erfindungsgemäße Schaltbetätigung kann auf vorteilhafte Art und Weise trotz eines Doppelkupplungs- Radsatzes ein konventionelles Handschaltgetriebe mit einer H - Schaltung umgesetzt werden. Damit kann die Anzahl gleicher Bauteile für unterschiedliche Getriebebauarten weiter erhöht werden, gleichzeitig können die Herstellungskosten gesenkt werden.

Für die Schaltbetätigung der einzelnen Gänge ist ein mit dem Seilzug oder dem Schaltgestänge versehenes Kulissenelement sowie für jede der beiden Schaltwellen ein Hebel - Umlenksystem vorgesehen, dessen eine Ende am Kulissenelement und dessen andere Ende an der Schaltwelle angelenkt ist. Damit ist auf einfache Art und Weise ein zum Schalten der geraden und ungeraden Gänge erforderliche Drehbewegung der Schaltwellen möglich. Weitere, die Erfindung ausgestaltende Merkmale sind in den Unteransprüchen enthalten.

Die über das Kulissenelement und das jeweilige Umlenksystem auf die jeweilige Schaltwelle übertragene Drehbewegung erfolgt über jeweils einen am Ende des Umlenksystems angeordneten Zapfen, der in eine Führungsnut einer auf der jeweiligen Schaltwelle angeordneten Buchse eingreift.

Auf den Schaltwellen sind Schaltfinger angeordnet, die mit Schaltmäulern von Schaltplatten zusammenwirken, wobei letztere einstückig mit Schaltgabeln verbunden sind, dergestalt, dass eine Drehbewegung der Schaltwelle in eine translatorische Bewegung der ausgewählten Schaltplatte übertragen wird.

Durch die Verwendung von zwei axial sowie radial um 180° auf jeweils einer Schaltwelle versetzt angeordneten Schaltfingern, die mit zwei ebenfalls um 180° versetzt zueinander angeordneten Schaltmäulern in einer Schaltplatte zusammenwirken, lassen sich die geraden bzw. ungeraden Gänge - entsprechend dem H - Schaltbild - in die gleiche Richtung schalten (gerade Gänge nach vorne, ungerade Gänge nach hinten).

Für das Vorwählen der jeweiligen Gänge ist eine mit dem Seilzug bzw. Schaltgestänge verbundenes Hebelsystem vorgesehen, das über jeweils einen Hebelarm an den beiden Schaltwellen angelenkt ist. Durch das Hebelsystem ist eine translatorische Bewegung der beiden Schaltwellen zum Vorwählen verschiedener Schaltgassen möglich.

Auf vorteilhafte Art und Weise ist den beiden Hauptschaltwellen jeweils eine Verriegelungsstange zugeordnet, die über die Schaltwelle axial geführt ist und eine Verriegelungsstruktur für die nicht gewählten Schaltgabeln aufweist.

In der Zeichnung sind zwei Ausführungsbeispiele der Erfindung dargestellt, die nachfolgend näher beschrieben sind.

Es zeigen:
- Fig. 1: eine Radsatzanordnung eines Doppelkupplungsgetriebes,
- Fig. 2: eine schematische Darstellung der erfindungsgemäßen mechanischen Schaltbetätigung,
- Fig. 3: eine perspektivische Ansicht der Schaltbetätigung

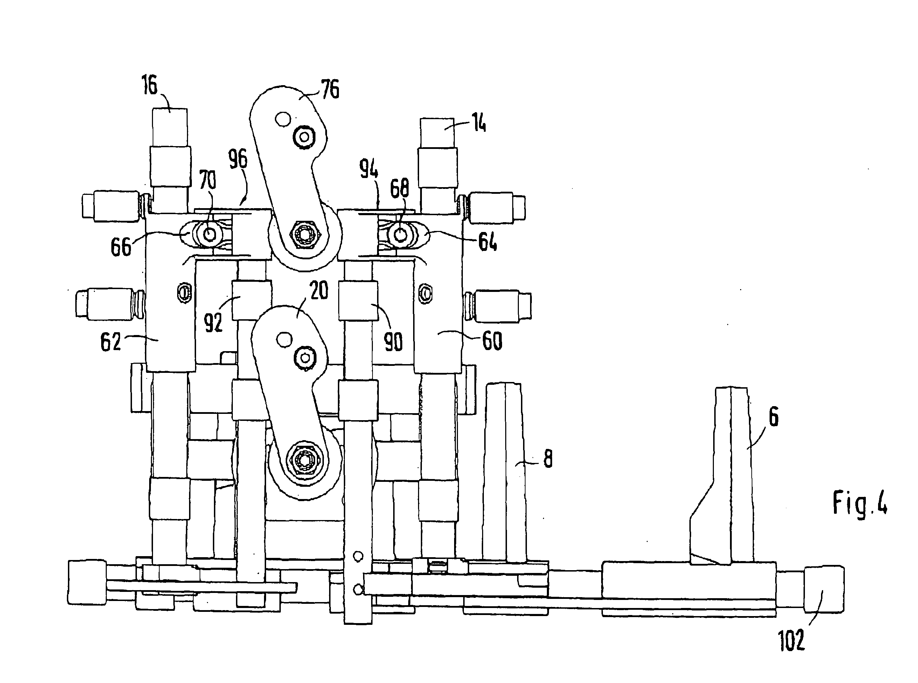

- Fig. 4: die Schaltbetätigung in einer Frontansicht,

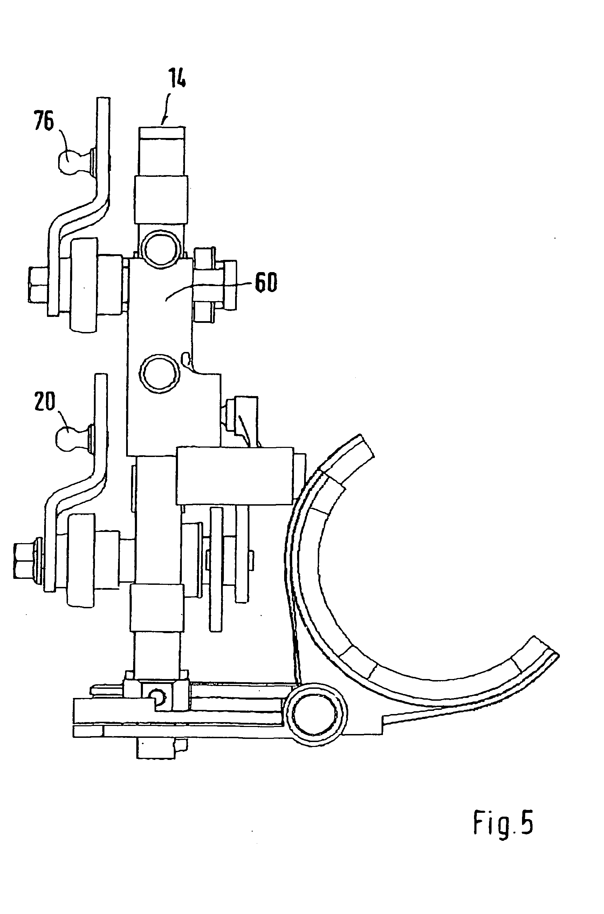

- Fig. 5: die Schaltbetätigung in einer Seitenansicht,

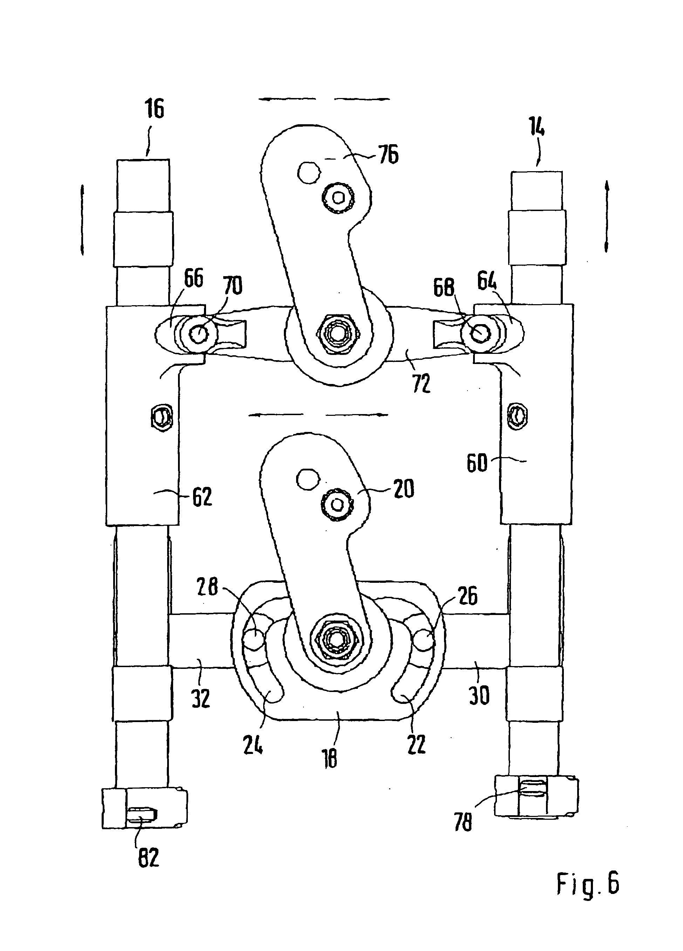

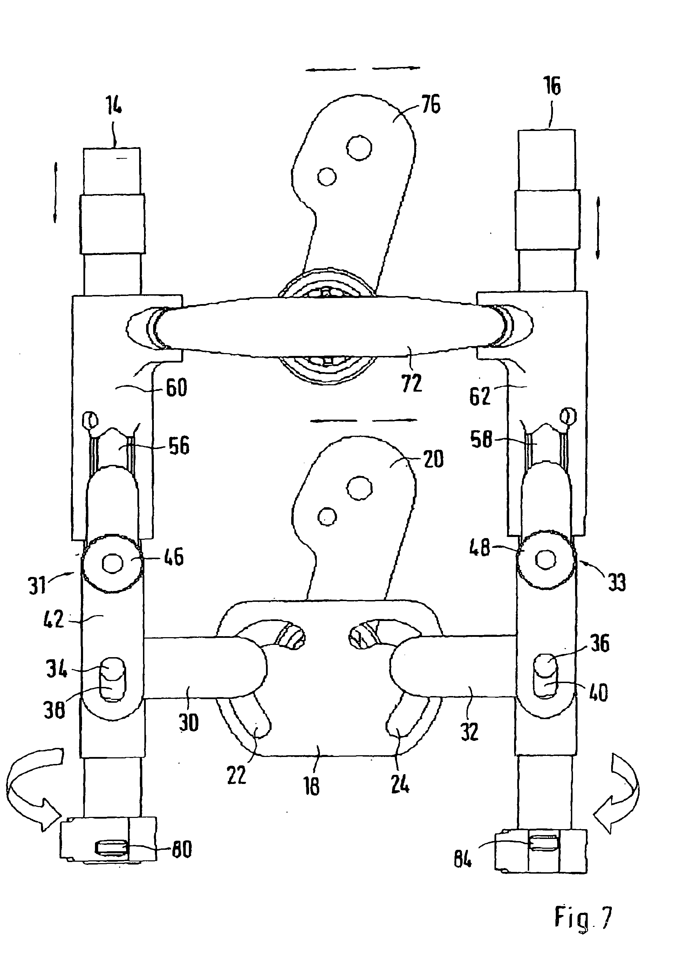

- Fig. 6+7: eine vereinfachte Darstellung des Schalt- und Wählschemas der Schaltvorrichtung,
- Fig. 8: ein Verriegelungsmechanismus der Schaltbetätigung für nicht ausgewählte Schaltgabeln,
- Fig. 9-15: schematische Darstellungen von Schaltvorgängen,
- Fig. 16: eine schematische Darstellung eines Wählvorgangs,
- Fig. 17: eine vereinfachte Darstellung einer zweiten Ausführungsform der erfindungsgemäßen Schaltvorrichtung,
- Fig. 18: eine Detailansicht der Kulissenführung für die zweite Ausführungsform,
- Fig. 19: eine erste Schaltposition gemäß der zweiten Ausführungsform, sowie
- Fig. 20: eine zweite Schaltposition gemäß der zweiten Ausführungsform.

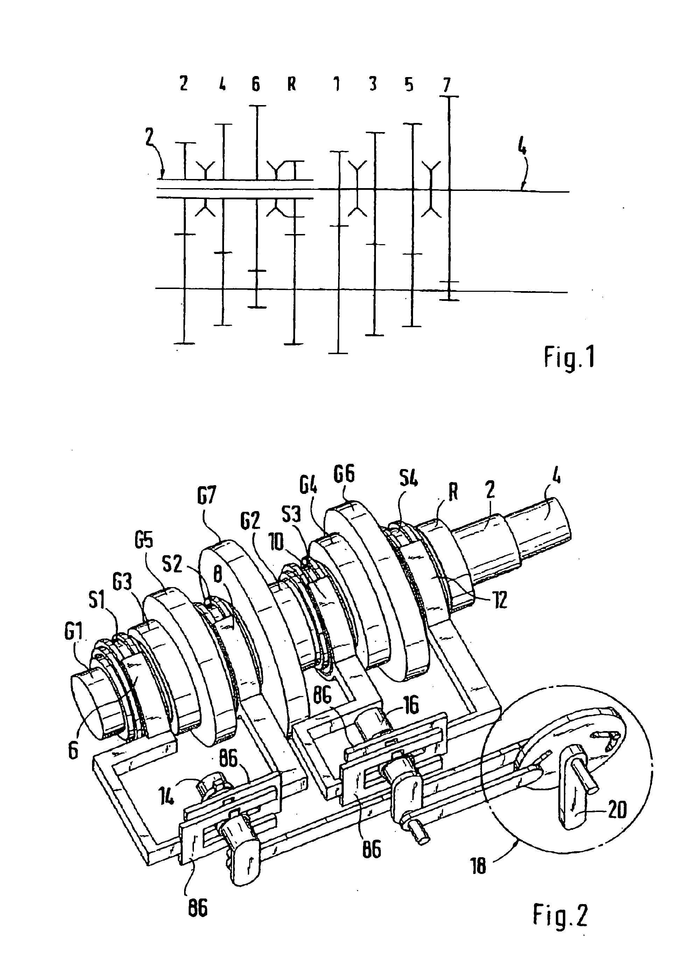

In Fig. 1 ist die Radsatzanordnung eines 7 - Gang - Doppelkupplungsgetriebes dargestellt. Dabei sind auf einer ersten Getriebeeingangswelle 2 die geraden Gänge 2 - 4-6 sowie der Rückwärtsgang R angeordnet, während auf einer zweiten, koaxial zur ersten Getriebeeingangswelle 2 angeordneten Getriebeeingangswelle 4 die ungeraden Gänge 1-3-5-7 angeordnet sind.

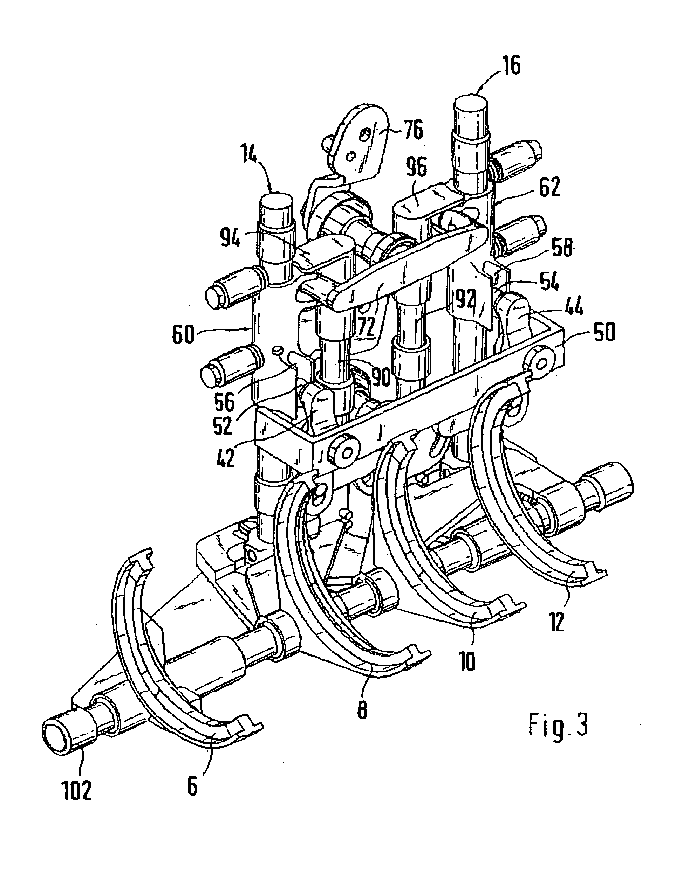

Um diese Radsatzanordnung auch für ein herkömmliches H - Stufenschaltgetriebe mit Zugkraftunterbrechung zugängig zu machen, ist neben einer drehfesten Verbindung (beispielsweise durch eine Steckverzahnung) der beiden Getriebeeingangswellen 2 und 4 ein mechanisches Schaltbetätigungssystem erforderlich, dessen Aufbau im nachfolgenden näher beschrieben ist:
Den auf den beiden Getriebeeingangswellen 2, 4 angeordneten Vorwärtsgängen G1 bis G7 sowie dem Rückwärtsgang R sind nicht näher dargestellte (Synchronisier-) Schaltkupplungen S1 bis S4 zugeordnet, die mit Hilfe von vier Schaltgabeln 6, 8, 10 und 12 wahlweise eine entsprechende drehfeste Verbindung zwischen dem ausgewählten Gangrad und der Getriebeeingangswelle 2, 4 herstellen. Für das Schalten der geraden Gänge G2 und G4 sind die Schaltkupplung S3 und für das Schalten der Gänge G6 und R die Schaltkupplung S4 verantwortlich, während für die ungeraden Gänge die Schaltkupplung S1 für die Gänge G1 und G3 und die Schaltkupplung S2 für die Gänge G5 und G7 verantwortlich sind. Für das Schalten der ungeraden Gänge G1, G3, G5 und G7 ist eine erste Schaltwelle 14 vorgesehen, während für die Gänge G2, G4, G6 sowie den Rückwärtsgang R eine zweite Schaltwelle 16 vorgesehen ist. Zum Schalten sämtlicher Gänge, bei der eine entsprechende Drehbewegung der Schaltwellen 14 und 16 erforderlich ist, ist für beide Schaltwellen 14 und 16 ein gemeinsames Kulissenelement 18 vorgesehen, das mit einem Hebelelement 20 versehen ist, an dem ein mit dem Schalthebel des Kraftfahrzeugs verbundener Seilzug oder ein Schaltgestänge angelenkt ist. Im Kulissenelement 18 sind zwei Führungsbahnen 22 und 24 eingebracht, in die jeweils ein Führungspin 26 und 28 eingreift. Der Führungspin 26, 28 ist an jeweils einem ersten Umlenkhebel 30 und 32 befestigt, die jeweils Bestandteil eines für beide Schaltwellen 14, 16 vorgesehenen Umlenksystems 31 und 33 sind, die für beide Schaltwellen 14, 16 gleich ausgebildet sind. Am anderen Ende des ersten Umlenkhebels 30, 32 ist ein weiterer Führungspin 34 und 36 angeordnet, der in ein Langloch 38 und 40 eines zweiten Umlenkhebels 42 und 44 eingreift. Die beiden Umlenkhebel 42 und 44 weisen jeweils ein Lagerauge 46 und 48 auf, die jeweils in einem Lagerzapfen (nicht dargestellt) einer gemeinsamem Lagerbrücke 50 (siehe Fig. 3) aufgenommen sind. Die beiden Umlenkhebel 42 und 44 weisen an ihrem anderen Ende einen Führungszapfen 52 und 54 auf, der jeweils in eine Führungsnut 56 und 58 eingreift. Die Führungsnut 56 und 58 ist jeweils einstückig aus einer drehfest mit der Schaltwelle 14, 16 verbundenen Buchse 60 und 62 herausgebildet.

Am oberen Ende der beiden Buchsen 60 und 62 ist ein zweite Führungsnut 64 und 66 herausgebildet, in die jeweils ein für die Wählbetätigung vorgesehener Führungszapfen 68 und 70 eingreift. Die beiden Führungszapfen 68 und 70 sind an den Enden eines mittig in einem Gehäuse (nicht dargestellt) gelagerten Hebelelementes 72 angeordnet. Am anderen Ende der mit dem Hebelelement 72 verbundenen Lagerachse 74 ist ein Wählhebel 76 angeordnet, der mit einem Seilzug oder einem Wählgestänge verbunden ist.

Am unteren Ende der beiden Schaltwellen 14, 16 sind jeweils zwei axial und um 180° radial versetzt angeordnete Schaltfinger 78 bis 84 angeordnet. Für das Schalten der einzelnen Gänge wirken die auf den beiden Schaltwellen 14 und 16 angeordneten Schaltfinger 78 bis 84 mit in Schaltplatten 86 eingebrachten Schaltmäulern 88 zusammen, wobei die Schaltplatten 86, wie in Fig. 2 schematisch dargestellt, mit den Schaltgabeln 6 bis 12 einstückig verbunden sind.

Parallel zu den beiden Schaltwellen 14 und 16 sind im nicht dargestellten Schaltgehäuse zwei Wellen 90 und 92 zugeordnet, die im Schaltgehäuse verdrehsicher gelagert sind.

Die Wellen 90 und 92 weisen an ihrem einen Ende einen gabelförmigen Greifer 94 und 96 auf, der die Wandungen der in den beiden Buchsen 60 und 62 herausgebildeten Führungsnuten 64 und 66 umgreift. Am anderen Ende der beiden Wellen 90 und 92 sind an jeder Welle für jeweils zwei Schaltplatten jeweils vier Verrieglungsstifte 98 für vier verschiedene Verriegelungspositionen - entsprechend den vier möglichen Schaltgassen - vorgesehen. Die Verriegelungsstifte 98 wirken, wie später noch näher erläutert, mit in den Schaltplatten 86 angeordneten Verriegelungsnuten 100 zusammen.

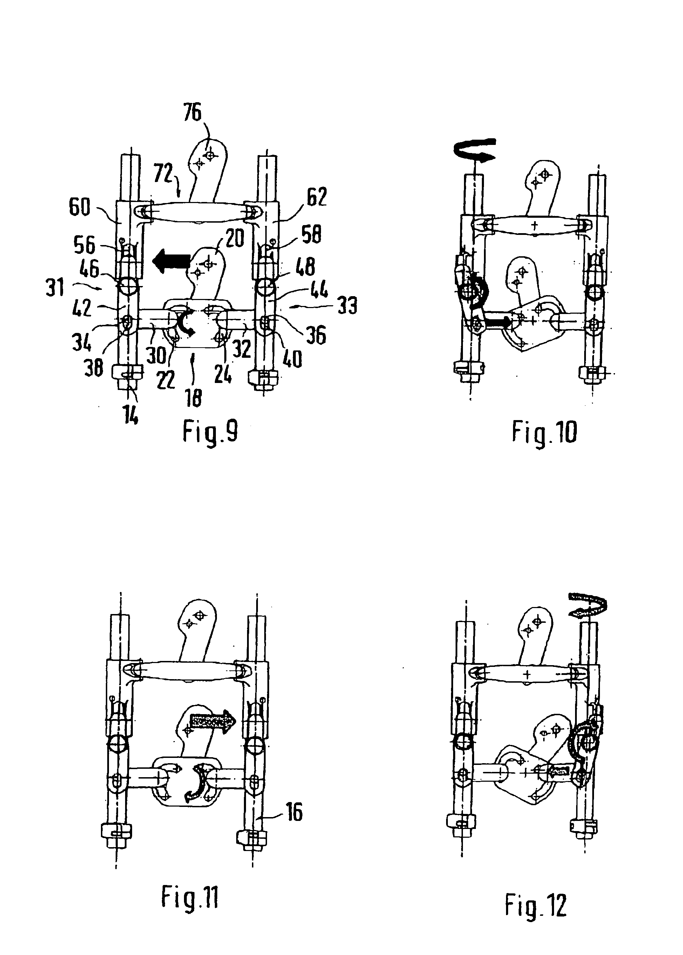

Die Schaltbetätigung, die auch ein Vorwählen der entsprechenden Gänge beinhaltet, wird im nachfolgenden näher erläutert (siehe Fig. 9 bis 16):
Durch die Bewegung des Schalthebels in der H- Kulisse (1. Gang) wird über den Seilzug oder das Schaltgestänge das Hebelelement 20 in die in Fig. 9 dargestellte Richtung bewegt. Über das Kulissenelement 18, das Umlenksystem 31 und die Buchse 60 wird die Schaltwelle 14 in eine Drehbewegung versetzt (siehe Fig. 10), die über den in die entsprechende Schaltplatte 86 eingreifenden Schaltfinger 78 (oder 80 ?) in eine translatorische Verschiebung der Schaltgabel S1 umgesetzt wird. Damit wird auf bekannte Art und Weise eine drehfeste Verbindung zwischen dem Gang- bzw. Losrad G1 und der Getriebewelle 4 hergestellt. Während die erste Schaltwelle 14 eine Drehbewegung ausführt, wird auf Grund des Verlaufs der Führungsbahn 24 eine Drehbewegung der Schaltwelle 16 in diesem Zustand nicht vollzogen.

Beim Hochschalten vom ersten zum zweiten Gang wird über den Schalthebel des Kraftfahrzeugs das Hebelelement 20 in die in Fig. 11 und 12 dargestellte Richtung überführt. Beim Erreichen einer Mittelposition (siehe Fig. 11) ist der 1. Gang wieder ausgelegt, während beim Erreichen der rechten Endstellung (siehe Fig. 12) nunmehr Schaltwelle 16 aufgrund des Verlaufs der Führungsbahn 24 in eine entsprechende Drehbewegung versetzt wird, die analog zum 1. Gang eine drehfeste Verbindung zwischen dem Gang- bzw. Losrad G2 und der Getriebewelle 2 herstellt.

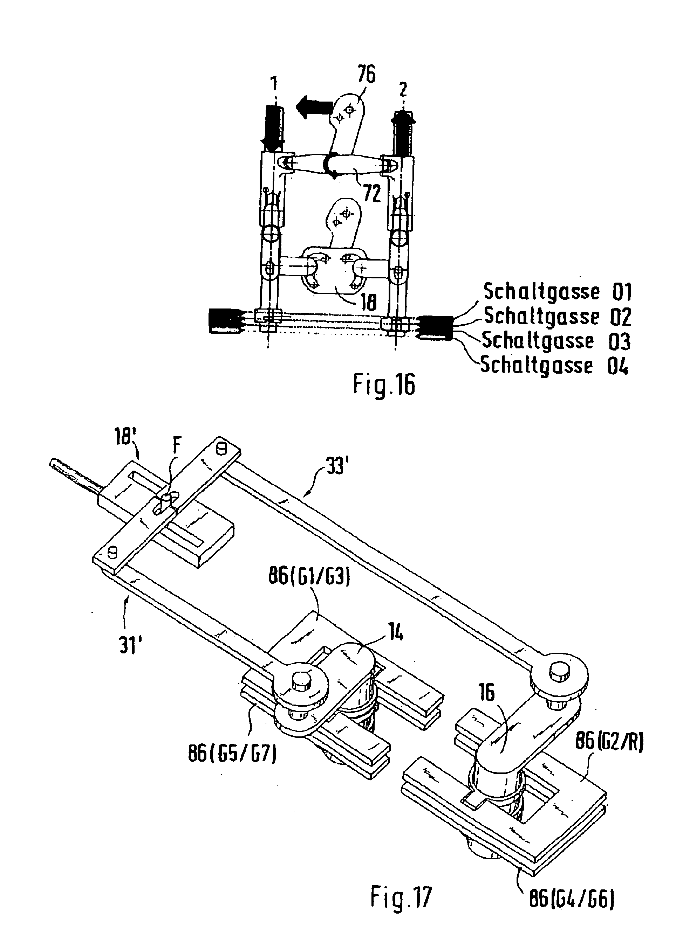

Für das Hochschalten vom zweiten in den dritten Gang ist aufgrund des notwendigen Schaltgassenwechsels eine axiale Verschiebung der Schaltwelle 14 erforderlich. Dies erfolgt mit Hilfe des Wählhebels 76, der sowohl die Schaltwelle 14 als auch die Schaltwelle 16 in eine neue Schaltgasse überführt (siehe Fig. 16).

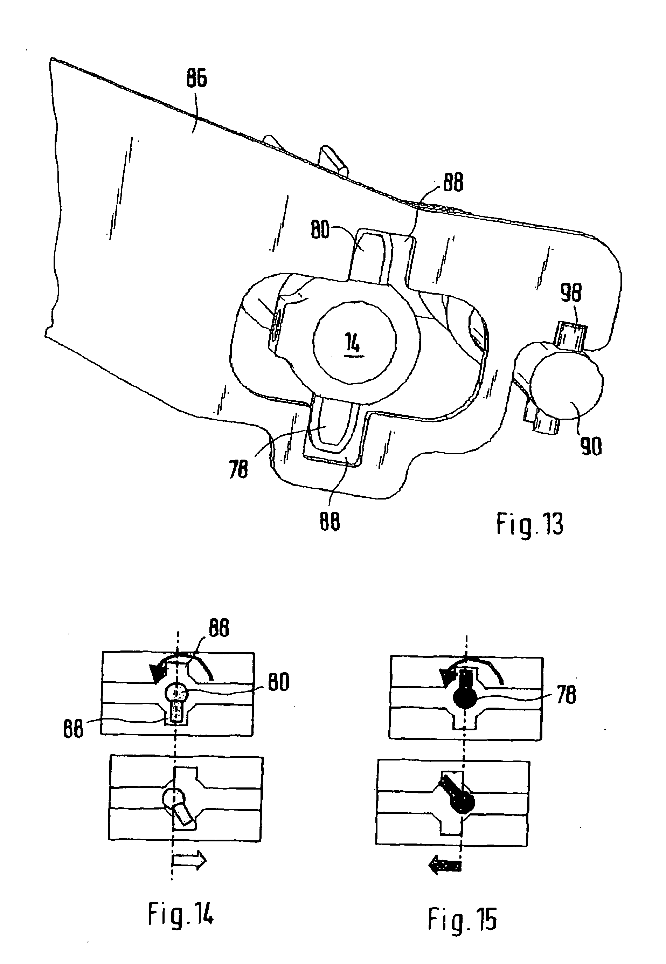

Der Schaltvorgang für den 3. Gang erfolgt analog zu den vorhergehenden Schaltvorgängen, wobei, wie anhand der Fig. 13 bis 15 dargestellt, nunmehr der dem Schaltfinger 78 gegenüberliegende Schaltfinger 80 in das ihm zugeordnete Schaltmaul 88 eingreift und über die Drehbewegung der Schaltwelle 14 eine drehfeste Verbindung zwischen dem Gangrad G3 und der Getriebewelle 4 herstellt wird.

Das Schalten und Vorwählen der übrigen Gänge G4 bis G7 sowie für den Rückwärtsgang R erfolgt nach demselben Schema, wie oben beschrieben.

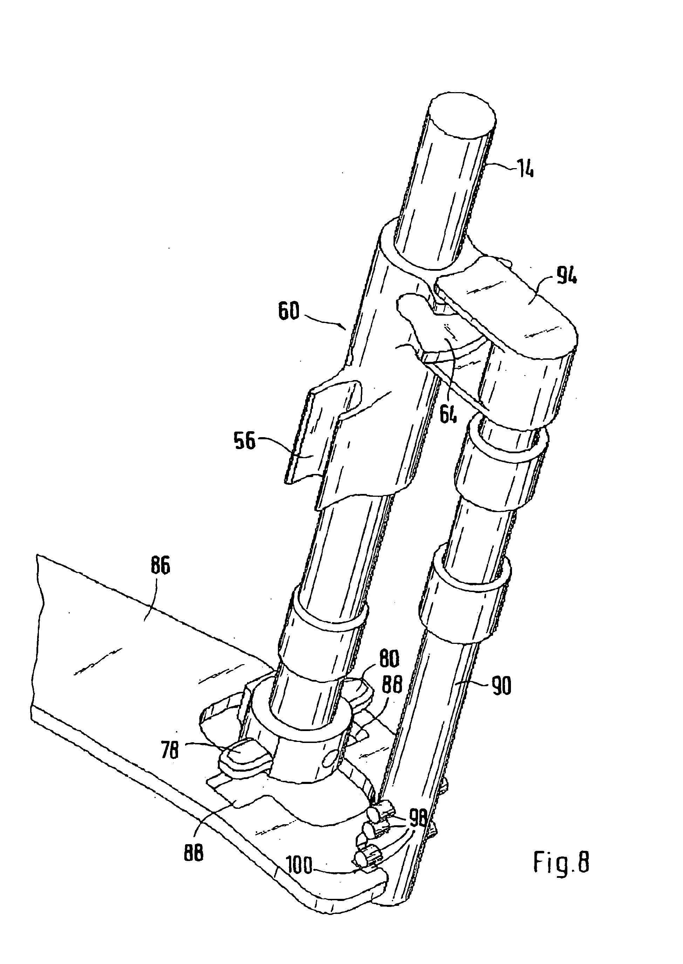

Damit eine ungewollte Verschiebung der nicht im Eingriff befindlichen Schaltgabeln auf der Schaltachse 102 verhindert wird, greifen, wie in Fig. 8 exemplarisch dargestellt, die auf den beiden Verriegelungswellen 90 und 92 vorgesehenen Verriegelungsstifte 98 in die Verriegelungsnuten 100 derjenigen Schaltplatten ein, deren Schaltgabeln nicht geschaltet sind (Schlüsselloch- Funktion). Dabei sind die Wellen 90 und 92 mit Hilfe der Greifer 94 und 96 über die Schaltwellen 14 und 16 axial geführt.

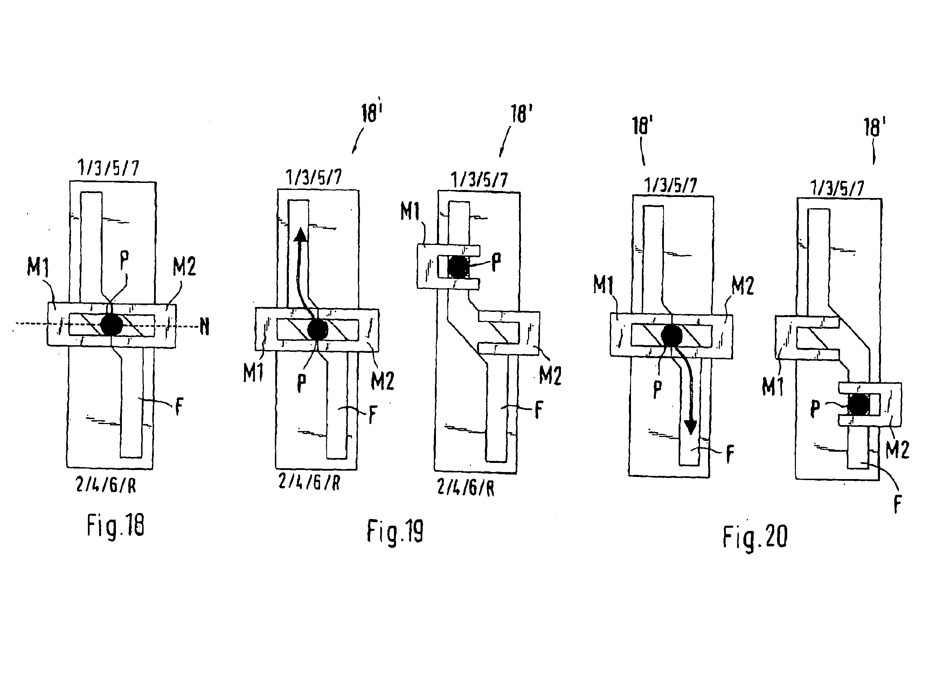

In Fig. 17 ist schematisch ein zweites Ausführungsbeispiel der erfindungsgemäßen Schaltbetätigung dargestellt, die nach dem gleichen Funktionsprinzip arbeitet und sich gegenüber der ersten Ausführungsform im wesentlichen durch ein abgeändertes Kulissenelement 18' unterscheidet. Das Kulissenelement 18 weist eine linear geführte Kulissen- Führungsbahn F auf, in der ein mit dem Schaltseilzug bzw. Schaltgestänge verbundener Führungspin P aufgenommen ist. Der Führungspin P ist weiterhin in zwei Mitnehmerelementen M1 und M2 aufgenommen, die Bestandteil der im ersten Ausführungsbeispiel beschriebenen zwei Umlenksysteme 31 und 33 sind. Beim Schalten von einer Neutralposition N in einen der ungeraden Gänge (siehe Fig. 19) zwingt die Führungsbahn F den Führungspin P in das Mitnahmemaul des Mitnehmerelementes M1, so dass analog zum ersten Ausführungsbeispiel in Abhängigkeit der gewählten Schaltgasse eine der ungeraden Gänge eingelegt wird. Wie in Fig. 20 dargestellt, wird beim Auslegen der ungeraden Gänge das Mitnehmerelement M1 wieder in die Neutralposition überführt; wird über den Schalthebel im Fahrzeug der Führungspin P nach hinten bewegt wechselt der Führungspin P in das Mitnahmemaul des Mitnehmerelementes M2 und einer der geraden Gänge 2/4/6 bzw. R kann eingelegt werden.

## Patentansprüche

1. Mehrstufiges Schaltgetriebe für eine Brennkraftmaschine mit einer Trennkupplung, einer Antriebswelle und einer Abtriebswelle, auf denen im Eingriff befindliche Getrieberäder zur Erzielung verschiedener Übersetzungsstufen angeordnet sind, wobei die Gangräder durch über Schaltgabeln (6 bis 12) betätigbare Schaltkupplungen (S1 bis S4) mit der Getriebewelle (2, 4) in eine kraftschlüssige Verbindung überführbar sind, und dass der Gangwechsel mit Hilfe einer Seilzug- und/oder Schaltgestängeanordnung erfolgt, wobei jeweils die Zahnradpaarungen für die geraden Gänge (G2, G4, G6) und für die ungeraden Gänge (G1, G3, G5, G7) nach Art eines Doppelkupplungs - Radsatzes nebeneinander angeordnet sind, wobei zur Umsetzung einer H - Schaltung für die Betätigung der Schaltkupplungen (S1 bis S4) der geraden Gänge (G2, G4, G6) und der ungeraden Gänge (G1, G3, G5, G7) jeweils eine Schaltwelle (14, 16) vorgesehen ist, die beide über eine gemeinsame Wähl- und /oder Schaltbetätigung bedienbar sind,
**dadurch gekennzeichnet, dass**
die Schaltbetätigung ein mit einem Seilzug oder einem Schaltgestänge verbundenes und mit mindestens einer Führungsbahn (22, 24, F) versehenes Kulissenelement (18) sowie für jede der beiden Schaltwellen (14, 16) jeweils ein Hebel - Umlenksystem (31, 33) aufweist, dessen eine Ende am Kulissenelement (18, 18') und dessen andere Ende an der Schaltwelle (14, 16) angelenkt ist.

2. Mehrstufiges Schaltgetriebe nach Anspruch 1, **dadurch gekennzeichnet, dass** das erste Ende des Umlenksystems (31, 33) über einen Führungspin (26, 28, P) in die Führungsbahn (22, 24, F) des Kulissenelementes (18) und das zweite Ende des Umlenksystems über einen Führungszapfen (52, 54) in eine Führungsnut (56, 58) einer auf der Schaltwelle (14, 16) befestigten Buchse (60, 62) eingreift.

3. Mehrstufiges Schaltgetriebe nach Anspruch 1 oder 2, **dadurch gekennzeichnet, dass** auf den Schaltwellen (14, 16) vorgesehene Schaltfinger (78 bis 84) mit Schaltmäulern (88) von Schaltplatten (86) zusammenwirken, wobei letztere jeweils mit einer Schaltgabel (6 bis 12) verbunden sind, dergestalt, dass eine Drehbewegung der Schaltwelle (14, 16) in eine translatorische Bewegung der ausgewählten Schaltplatte (86) bzw. Schaltgabel (8 bis 12) umgesetzt wird.

4. Mehrstufiges Schaltgetriebe nach Anspruch 3, **dadurch gekennzeichnet, dass** die Schaltplatten (86) jeweils zwei sich gegenüber liegende Schaltmäuler (88) aufweisen, wobei die Schaltfinger (78 bis 84) für eine Schaltplatte (86) axial sowie um 180° radial versetzt zueinander angeordnet sind.

5. Mehrstufiges Schaltgetriebe nach einem der vorhergehenden Ansprüche, **dadurch gekennzeichnet, dass** die Wählbetätigung ein mit dem Seilzug oder dem Schaltgestänge verbundenes Hebelelement (72) aufweist, an dem beiden Schaltwellen (14, 16) angelenkt sind.

6. Mehrstufiges Schaltgetriebe nach Anspruch 5, **dadurch gekennzeichnet, dass** die beiden Enden des Hebelelementes (72) über jeweils einen Führungszapfen (68, 70) in jeweils eine Führungsnut (64, 66) eine auf der Schaltwelle (14, 16) befestigten Buchse (60, 62) eingreifen.

7. Mehrstufiges Schaltgetriebe nach Anspruch 2 und 6, **dadurch gekennzeichnet, dass** die Buchse (60, 62) für die Schalt und die Wählbetätigung einstückig ausgebildet ist.

8. Mehrstufiges Schaltgetriebe nach einem der vorhergehenden Ansprüche, **dadurch gekennzeichnet, dass** den Schaltwellen (14, 16) jeweils eine Verriegelungswelle (90, 92) zugeordnet ist, die über die Schaltwelle (14, 16) axial geführt ist und eine Verriegelungsstruktur (98, 100) für nicht gewählte Schaltgabeln (6 bis 12) aufweist.

9. Mehrstufiges Schaltgetriebe nach Anspruch 8, **dadurch gekennzeichnet, dass** die Verriegelungswelle (90, 92) Verrieglungsstifte (98) aufweist, die in Verriegelungsnuten (100) von Schaltplatten (86) nicht ausgewählter Schaltgabeln (6 bis 12) eingreifen.

## Claims

1. Multi-step shift gearbox for an internal combustion engine, having a separating clutch and having a drive input shaft and a drive output shaft on which are arranged gearwheels, which mesh with one another, for realizing different transmission ratio stages, wherein the gearwheels can be placed in non-positively locking connection with the gearbox shaft (2, 4) by means of shift clutches (S1 to S4) which can be actuated via shift forks (6 to 12), and wherein the gearshift takes place by means of a cable pull and/or shift linkage arrangement, wherein in each case the gearwheel pairings for the even-numbered gears (G2, G4, G6) and for the odd-numbered gears (G1, G3, G5, G7) are arranged adjacent to one another in the manner of a double-clutch wheel set, wherein to implement an H-pattern shift gate, in each case one shift shaft (14, 16) is provided for the actuation of the shift clutches (S1 to S4) of the even-numbered gears (G2, G4, G6) and of the odd-numbered gears (G1, G3, G5, G7), which shift shafts can both be operated by means of a common selection and/or shift actuation means, **characterized in that**
the shift actuation means has a slotted link element (18), which is connected to a cable pull or to a shift linkage and which is provided with at least one guide track (22, 24, F), and said shift actuation means also has, for each of the two shift shafts (14, 16), in each case one lever deflecting system (31, 33), one end of which is articulatedly connected to the slotted link element (18, 18') and the other end of which is articulatedly connected to the shift shaft (14, 16).

2. Multi-step shift gearbox according to Claim 1, **characterized in that** the first end of the deflecting system (31, 33) engages by means of a guide pin (26, 28, P) into the guide track (22, 24, F) of the slotted link element (18), and the second end of the deflecting system engages by means of a guide pin (52, 54) into a guide groove (56, 58) of a bush (60, 62) fastened to the shift shaft (14, 16).

3. Multi-step shift gearbox according to Claim 1 or 2, **characterized in that** shift fingers (78 to 84) provided on the shift shafts (14, 16) interact with shift jaws (88) of shift plates (86), wherein said shift plates are connected in each case to one shift fork (6 to 12), in such a way that a rotational movement of the shift shaft (14, 16) is converted into a translatory movement of the selected shift plate (86) or shift fork (8 to 12).

4. Multi-step shift gearbox according to Claim 3, **characterized in that** the shift plates (86) have in each case two opposite shift jaws (88), wherein the shift fingers (78 to 84) for one shift plate (86) are arranged so as to be offset with respect to one another axially and radially by 180°.

5. Multi-step shift gearbox according to one of the preceding claims, **characterized in that** the selection actuation means has a lever element (72) which is connected to the cable pull or to the shift linkage and to which both shift shafts (14, 16) are articulatedly connected.

6. Multi-step shift gearbox according to Claim 5, **characterized in that** the two ends of the lever element (72) engage by means of in each case one guide pin (68, 70) into in each case one guide groove (64, 66) of a bush (60, 62) which is fastened to the shift shaft (14, 16).

7. Multi-step shift gearbox according to Claim 2 and 6, **characterized in that** the bush (60, 62) for the shift and selection actuation means is formed in one piece.

8. Multi-step shift gearbox according to one of the preceding claims, **characterized in that** the shift shafts (14, 16) are assigned in each case one locking shaft (90, 92) which is guided axially by means of the shift shaft (14, 16) and which has a locking structure (98, 100) for non-selected shift forks (6 to 12).

9. Multi-step shift gearbox according to Claim 8, **characterized in that** the locking shaft (90, 92) has locking pins (98) which engage into locking grooves (100) of shift plates (86) of non-selected shift forks (6 to 12).

## Revendications

1. Transmission multi-étagée pour un moteur à combustion interne comprenant un embrayage de séparation, un arbre d'entraînement et un arbre de sortie, sur lesquels sont disposés des pignons de transmission en prise les uns avec les autres, destinés à produire différents étages de démultiplication, les pignons de vitesse pouvant être amenés en liaison par engagement par force avec l'arbre de transmission (2, 4) au moyen d'embrayages de changement de vitesse (S1 à S4) pouvant être commandés par le biais de fourchettes de sélection (6 à 12), et le changement de rapport ayant lieu à l'aide d'un agencement à câble Bowden et/ou à tringlerie de changement de vitesse, les paires de roues dentées pour les rapports pairs (G2, G4, G6) et pour les rapports impairs (G1, G3, G5, G7) étant disposées les unes à côté des autres à la manière d'un jeu de pignons d'un double embrayage, et pour la commutation d'un système de passage de rapports en H pour l'actionnement des embrayages de changement de vitesse (S1 à S4) des rapports pairs (G2, G4, G6) et des rapports impairs (G1, G3, G5, G7), un arbre de changement de vitesse respectif (14, 16) étant prévu, lesdits arbres pouvant être commandés par le biais d'un actionnement de sélection et/ou de changement de vitesse commun,
**caractérisée en ce que**
l'actionnement de changement de vitesse présente un élément de coulisse (18) connecté à un câble Bowden ou à une tringlerie de changement de vitesse et pourvu d'au moins une piste de guidage (22, 24, F), ainsi qu'un système de levier-déflexion (31, 33) respectif pour chacun des deux arbres de changement de vitesse (14, 16), dont une extrémité est articulée à l'élément de coulisse (18, 18') et dont l'autre extrémité est articulée à l'arbre de changement de vitesse (14, 16).

2. Transmission multi-étagée selon la revendication 1, **caractérisée en ce que** la première extrémité du système de déflexion (31, 33) vient en prise par le biais d'une goupille de guidage (26, 28, P) dans la piste de guidage (22, 24, F) de l'élément de coulisse (18) et la deuxième extrémité du système de déflexion vient en prise par le biais d'un tourillon de guidage (52, 54) dans une rainure de guidage (56, 58) d'une douille (60, 62) fixée sur l'arbre de changement de vitesse (14, 16).

3. Transmission multi-étagée selon la revendication 1 ou 2, **caractérisée en ce que** des doigts de changement de vitesse (78 à 84) prévus sur les arbres de changement de vitesse (14, 16) coopèrent avec des griffes de changement de vitesse (88) de plaques de changement de vitesse (86), ces dernières étant respectivement connectées à une fourchette de sélection (6 à 12) de telle sorte qu'un mouvement de rotation de l'arbre de changement de vitesse (14, 16) soit converti en un mouvement de translation de la plaque de changement de vitesse sélectionnée (86) ou de la fourchette de sélection (8 à 12) sélectionnée.

4. Transmission multi-étagée selon la revendication 3, **caractérisée en ce que** les plaques de changement de vitesse (86) présentent à chaque fois deux griffes de changement de vitesse (88) opposées mutuellement, les doigts de changement de vitesse (78 à 84) pour une plaque de changement de vitesse (86) étant disposés de manière décalée axialement ainsi que radialement de 180° les uns par rapport aux autres.

5. Transmission multi-étagée selon l'une quelconque des revendications précédentes, **caractérisée en ce que** l'actionnement de sélection présente un élément de levier (72) connecté au câble Bowden ou à la tringlerie de changement de vitesse, sur lequel élément de levier sont articulés les deux arbres de changement de vitesse (14, 16).

6. Transmission multi-étagée selon la revendication 5, **caractérisée en ce que** les deux extrémités de l'élément de levier (72) viennent en prise par le biais d'un tourillon de guidage respectif (68, 70) dans une rainure de guidage respective (64, 66) d'un manchon (60, 62) fixé sur l'arbre de changement de vitesse (14, 16).

7. Transmission multi-étagée selon les revendications 2 et 6, **caractérisée en ce que** le manchon (60, 62) pour l'actionnement de changement de vitesse et de sélection est réalisé d'une seule pièce.

8. Transmission multi-étagée selon l'une quelconque des revendications précédentes, **caractérisée en ce que** les arbres de changement de vitesse (14, 16) sont associés à chaque fois à un arbre de verrouillage (90, 92), qui est guidé axialement sur l'arbre de changement de vitesse (14, 16) et qui présente une structure de verrouillage (98, 100) pour les fourchettes de sélection (6 à 12) non sélectionnées.

9. Transmission multi-étagée selon la revendication 8, **caractérisée en ce que** l'arbre de verrouillage (90, 92) présente des goupilles de verrouillage (98) qui viennent en prise dans des rainures de verrouillage (100) de plaques de changement de vitesse (86) de fourchettes de sélection (6 à 12) non sélectionnées.
